# EUROPEAN PATENT APPLICATION

(11) **EP 4 819 235 A1**
(43) Date of publication of application: **07.10.2026**
(21) Application number: 25891238.5
(22) Date of filing: 18.12.2025
(51) Int. Cl.: H01M 4/36, C01G 53/504, H01M 10/0525, H01M 4/525, H01M 4/62, H01M 10/054

(54) **POSITIVE ELECTRODE MATERIAL, POSITIVE ELECTRODE SHEET AND BATTERY**

(30) Priority: 26.12.2024 CN 202411976483
(71) Applicant: BTR (Jiangsu) New Material Technology Co., Ltd, Changzhou, Jiangsu 213200 (CN)
(72) Inventor: SHENG, Jinzhi, hangzhou, Jiangsu 213200 (CN); LIU, Guoxue, hangzhou, Jiangsu 213200 (CN); ZHENG, Yu, hangzhou, Jiangsu 213200 (CN); SONG, Xiong, hangzhou, Jiangsu 213200 (CN); YANG, Shunyi, hangzhou, Jiangsu 213200 (CN); HUANG, Youyuan, hangzhou, Jiangsu 213200 (CN)
(74) Representative: Forresters IP LLP
(86) International application number: PCT/CN2025/143644
(87) International publication number: WO 2026/103952

(57) **Abstract**

Provided is a cathode material, a cathode sheet and a battery, wherein the cathode material is a nickel-cobalt-lithium composite oxide; the mass concentration of free nitrate ions in the cathode material is Q ppm, where 10 ≤ Q ≤ 100; and the number fraction of particles with a particle size of less than 1 µm in the cathode material is R%, where 8 ≤ R ≤ 16. The cathode material of the present invention can effectively improve the specific capacity and high initial Coulombic efficiency of the cathode material while enhancing structural stability and cycling performance.

## Description

The present invention claims priority to Chinese Patent Invention No. 202411976483.9 filed on December 26, 2024. The present invention cites the full text of the above-mentioned Chinese patent invention.

### Technical Field

The present invention belongs to the technical field of cathode materials, and in particular, relates to a cathode material, a cathode sheet and a battery.

### Background

Lithium-ion batteries are widely used in notebook computers, mobile phones, digital products, and other fields due to their high energy density, good safety performance, long cycle life, and environmental friendliness. Compared with the development of high-capacity anode materials (approximately 800-1000 mAh/g), the development of cathode materials has been relatively slow. Therefore, researchers have currently concentrated on high-capacity, high-voltage cathode materials to improve the energy density of lithium-ion batteries.

As the nickel content in the cathode materials increases, problems such as lithium-nickel mixing, structural degradation, reduced thermal stability, and increased residual alkali are inevitably caused, leading to capacity fade, reduced cycling performance, and poor structural stability, which affect safety and high-performance operation. Moreover, under high voltage, excessive release of lithium ions from the cathode materials leads to cation mixing, which in turn causes the release of lattice oxygen, resulting in gas generation in the battery and a significant decrease in the capacity and cycling performance of the cathode materials. In addition, at high potentials, side reactions between the cathode materials and the electrolyte intensify, producing carbon dioxide gas, which changes the surface crystal structure of the cathode materials and causes the loss of lithium storage sites.

Therefore, how to improve the high-voltage resistance of the cathode materials and reduce the crystal structure distortion of the cathode materials is one of the urgent problems to be solved at present.

### Summary

The present invention provides a cathode material, a cathode sheet and a battery. The cathode material of the present invention has excellent high-voltage resistance, can reduce the crystal structure distortion of the cathode material, and thereby improve the structural stability and cycling performance of the cathode material.

In first aspect, the present invention provides a cathode material, wherein the mass concentration of free nitrate ions in the cathode material is Q ppm, where 10 ≤ Q ≤ 100; and in a scanning electron microscope image of the cathode material, the number fraction of particles with a particle size of less than 1 µm in the cathode material is R%, where 8 ≤ R ≤ 16; wherein the mass concentration Q ppm of the free nitrate ions in the cathode material is obtained by dispersing the cathode material in pure water, performing ultrasonication and filtration, and then characterizing the filtrate by an ion chromatography instrument.

In second aspect, the present invention provides a cathode sheet, wherein the cathode sheet comprises the cathode material as described in the first aspect.

In third aspect, the present invention provides a battery, wherein the battery comprises the cathode sheet as described in the second aspect or the cathode material as described in the first aspect.

Compared with the prior art, the present invention has the following beneficial effects:
The present invention controls the mass concentration of the free nitrate ions in the cathode material to be between 10 ppm and 100 ppm, while controlling the number fraction of the particles with a particle size of less than 1 µm in the cathode material to be between 8% and 16%. An appropriate amount of small particles can improve the packing tightness between cathode material particles without causing excessive side reactions, can improve lithium ion transport, reduce the internal resistance of the cathode material, lower the lithium ion transport barrier, and enhance the lithium intercalation and deintercalation efficiency of the cathode material. Under the synergistic effect of an appropriate amount of the free nitrate ions and the particles with a particle size of less than 1 µm, the high-voltage resistance and high capacity of the cathode material can be improved, while the lithium ion transport efficiency of the cathode material is enhanced, and the cycling stability of the cathode material is improved.

### Brief Description of the Drawings

The drawings to be used in description of embodiments or the prior art will be briefly introduced below in order to illustrate the technical solutions in the embodiments of the present invention or the prior art more clearly. Apparently, the drawings described below are only some embodiments of the present invention. Those of ordinary skill in the art may obtain other drawings according to these drawings without creative work.
Fig. 1 is a schematic diagram of a discharge state of a battery provided in an embodiment of the present invention.
Fig. 2 shows the element Li spectrum obtained by XPS characterization of the cathode material prepared in Embodiment 1 of the present invention after the first charge-discharge cycle.
Fig. 3 shows the element Li spectrum obtained by XPS characterization of the cathode material prepared in Comparative example 1 of the present invention after the first charge-discharge cycle.

### Detailed Description of the Embodiments

To facilitate a better understanding of the technical solutions of the present invention, the following describes the embodiments of the present invention in detail with reference to the accompanying drawings.

It should be understood that the described embodiments are merely a part of, and not all of, the embodiments of the present invention. All the other embodiments obtained by those of ordinary skill in the art based on the embodiments in the present invention without creative work fall within the scope of protection of the present invention.

Moreover, the terms such as "first" and "second" are used only for the purpose of description and should not be construed as indicating or implying a relative importance, or implicitly indicating a quantity of indicated technical features. Thus, a feature defined with "first" or "second" may explicitly or implicitly includes one or more of the features.

To facilitate understanding of the present invention, specific terms are appropriately defined herein. Unless otherwise defined herein, scientific and technical terms used in the present invention have the meanings commonly understood by a person skilled in the art to which the present invention belongs.

The present invention provides a cathode material, wherein the mass concentration of free nitrate ions in the cathode material is Q ppm, where 10 ≤ Q ≤ 100; and in a scanning electron microscope image of the cathode material, the number fraction of particles with a particle size of less than 1 µm in the cathode material is R%, where 8 ≤ R ≤ 16; wherein the mass concentration Q ppm of the free nitrate ions in the cathode material is obtained by dispersing the cathode material in pure water, performing ultrasonication and filtration, and then characterizing the filtrate by an ion chromatography instrument.

In the cathode material provided by the present invention, the mass concentration of the free nitrate ions is Q ppm, where 10 ≤ Q ≤ 100. When the mass concentration Q of the free nitrate ions in the cathode material satisfies the above range, the cathode material exhibits good structural stability and cycling performance. The applicant believes that this is because the free nitrate ions in the cathode material can react with active lithium ions during the charge-discharge cycling process, thereby inducing the formation of Li₂O on the surface of the cathode material. Li₂O has high-voltage resistance, which helps to improve the high-voltage resistance of the cathode material, reduce the occurrence of side reactions between the cathode material and the electrolyte, and because Li₂O is distributed on the surface of the cathode material, it can reduce surface defects and lower the surface energy of the cathode material, contributing to improved crystal structural stability of the cathode material, reduced oxygen release from the crystal lattice, and consequently reduced crystal structure distortion of the cathode material.

However, since the presence of Li₂O on the surface of the cathode material can affect ion transport, leading to a decrease in the kinetic capability of lithium intercalation and deintercalation reactions of the cathode material. Therefore, the present invention controls the mass concentration of the free nitrate ions in the cathode material to be between 10 ppm and 100 ppm, while controlling the number fraction of the particles with a particle size of less than 1 µm in the cathode material to be between 8% and 16%. An appropriate amount of small particles can improve the packing tightness between cathode material particles without causing excessive side reactions, can improve lithium ion transport, reduce the internal resistance of the cathode material, lower the lithium ion transport barrier, and enhance the lithium intercalation and deintercalation efficiency of the cathode material. Under the synergistic effect of an appropriate amount of the free nitrate ions and the particles with a particle size of less than 1 µm, the high-voltage resistance and high capacity of the cathode material can be improved, while the lithium ion transport efficiency of the cathode material is enhanced, and the cycling stability of the cathode material is improved.

In some embodiments, the mass concentration of the free nitrate ions in the cathode material can specifically be 10 ppm, 12 ppm, 25 ppm, 30 ppm, 50 ppm, 68 ppm, 75 ppm, 80 ppm, 85 ppm, 95 ppm, or 100 ppm, etc. Of course, other values within the above ranges are also possible and are not limited herein. If the mass concentration of the free nitrate ions in the cathode material is too high, an excessive amount of Li₂O will form on the surface of the cathode material, hindering ion transport in the cathode material. When the mass concentration of the free nitrate ions in the cathode material is too low, too little Li₂O forms on the surface of the cathode material during the charge-discharge process, which exacerbates side reactions between the cathode material and the electrolyte, and particularly under high-voltage charge-discharge conditions, intensifies the capacity loss of the cathode material. In the present invention, by controlling the mass concentration of the free nitrate ions in the cathode material within the above range, an appropriate amount of Li₂O can be induced to form on the surface of the cathode material particles after cyclic charge-discharge. An appropriate amount of Li₂O can reduce surface defects and lower the surface energy of the cathode material, contributing to improved crystal structural stability of the cathode material, and enabling the cathode material to possess both high-voltage resistance and excellent cycling stability.

It should be noted that, during the first charge-discharge process of a coin cell made from the cathode material, the free nitrate ions in the cathode material can induce the formation of a certain amount of Li₂O protective layer on the surface of the cathode material through the reaction: 2Li⁺ + NO₃⁻ + 2e⁻ = Li₂O + NO²⁻. This protective layer possesses high chemical stability, remains inert under high voltage, effectively isolates the electrolyte, and reduces the occurrence of side reactions.

In some embodiments, the number fraction of the particles with a particle size of less than 1 µm in the cathode material is 8% to 16%, and can specifically be 8%, 9%, 10%, 11%, 12%, 13%, 14%, 15%, or 16%, etc. Of course, other values within the above ranges are also possible and are not limited herein. When the number fraction of the particles with a particle size of less than 1 µm is too high, it means that the amount of fine powder increases, and the particle size distribution width of the cathode material increases. This can increase the compaction density of the cathode material, but the specific surface area of the cathode material increases, and the smaller the particle size, the more severe the side reactions with the electrolyte. Furthermore, during the charge-discharge cycling process, these fine powders can easily complicate the lithium ion transport paths, affecting the intercalation and deintercalation of lithium ions, and resulting in a decrease in both the structural stability and cycling stability of the cathode material. When the number fraction of the particles with a particle size of less than 1 µm is too low, the lithium ion transport path is prolonged, the initial DCR of the cathode material increases, and the compaction density of the cathode material decreases. The present invention controls the number fraction of the particles with a particle size of less than 1 µm within the above range, which can shorten the lithium ion diffusion path, reduce the transport barrier between the cathode material particles, ensure that the compaction density of the cathode material remains within an appropriate range, improve the energy density of the cathode material, and simultaneously help reduce the occurrence of side reactions between the cathode material and the electrolyte, lower impedance, and improve the capacity and cycling stability of the cathode material.

In some embodiments, the cathode material has a general chemical formula of LiₙNiₓCo_{y}N_{z}MₛO₂, wherein 0.9 ≤ n ≤ 1.1, 0 < x < 1, 0 < y < 1, 0 < z < 1, 0 ≤ s < 1, x + y + z + s = 1, N comprises at least one of Mn and Al, and M comprises at least one of Zr, Mg, W, Mo, Ti, Ba, Sr, Cr, Zn, Y, V, Cu, B, and Nb.

Specifically, the value of n can specifically be 0.90, 0.92, 0.95, 0.96, 0.98, 0.99, 1.0, 1.02, 1.05, 1.08, or 1.1, etc., the value of x can range from 0.1, 0.2, 0.3, 0.4, 0.5, 0.6, 0.7, 0.8, 0.9, or 0.92, etc., the value of y can range from 0.001, 0.06, 0.1, 0.2, 0.28, 0.3, 0.4, 0.5, 0.6, 0.7, 0.8, 0.9, or 0.92, etc., the value of z can range from 0.001, 0.1, 0.2, 0.3, 0.4, 0.5, 0.6, 0.7, 0.8, 0.9, or 0.92, etc., and the value of s can range from 0, 0.001, 0.005, 0.008, 0.01, 0.02, 0.05, 0.08, 0.1, 0.2, 0.3, or 0.5, etc. Of course, other values within the above ranges are also possible and are not limited herein.

The cathode material is a nickel-cobalt-lithium composite oxide, and the nickel-cobalt-lithium composite oxide includes a nickel-cobalt-manganese-lithium composite oxide or a nickel-cobalt-aluminum-lithium composite oxide.

In some embodiments, the volume particle size distribution of the cathode material satisfies: 0.2 µm ≤ D10 ≤ 2.0 µm, 2.0 µm ≤ D50 ≤ 5.0 µm, and 6.0 µm ≤ D90 ≤ 12.0 µm. Specifically, D10 can be 0.2 µm, 0.3 µm, 0.5 µm, 0.8 µm, 1.0 µm, 1.2 µm, 1.4 µm, 1.5 µm, 1.8 µm, or 2.0 µm, etc., D50 can be 2.0 µm, 2.3 µm, 2.5 µm, 2.8 µm, 3.0 µm, 3.2 µm, 3.5 µm, 3.8 µm, 4.0 µm, 4.2 µm, 4.5 µm, or 5.0 µm, etc., and D90 can be 6.0 µm, 6.5 µm, 6.8 µm, 7.0 µm, 8.0 µm, 9.2 µm, 10.5 µm, 11 µm, 11.5 µm, 11.8 µm, or 12.0 µm, etc. Of course, other values within the above ranges are also possible and are not limited herein. In the present invention, controlling the volume particle size distribution of the cathode material to satisfy the above conditions can improve the compaction density of the cathode material and enhance the cycling stability of the cathode material.

In some embodiments, the volume particle size distribution width of the cathode material satisfies: 0.8 ≤ (D90 - D10)/D50 ≤ 2.0, and can specifically be 0.8, 0.9, 1.0, 1.09, 1.1, 1.2, 1.25, 1.3, 1.35, 1.4, 1.45, 1.5, 1.6, 1.7, 1.8, or 2.0, etc. Of course, other values within the above range are also possible and are not limited herein. By controlling the particle size distribution width of the cathode material within the above range, the present invention can improve the compaction density of the cathode material and enhance the energy density of a battery made from the cathode material.

In some embodiments, the mass concentration of free sulfate ions in the cathode material is K ppm, where 10 ≤ K ≤ 800. Specifically, it can be 10 ppm, 50 ppm, 80 ppm, 100 ppm, 150 ppm, 200 ppm, 275 ppm, 400 ppm, 470 ppm, 560 ppm, 650 ppm, 780 ppm, or 800 ppm, etc. Of course, other values within the above range are also possible and are not limited herein. In the present invention, controlling the mass concentration of the free sulfate ions within the above range can increase the migration rate of lithium ions, improve the capacity of the cathode material, and enhance the structural stability of the cathode material.

In some embodiments, the average particle size of primary particles in the cathode material is 1 µm to 5 µm, and can specifically be 1.0 µm, 1.2 µm, 1.4 µm, 1.5 µm, 1.8 µm, 2.0 µm, 2.4 µm, 2.8 µm, 3.0 µm, 3.5 µm, 3.8 µm, 4.0 µm, 4.2 µm, 4.5 µm, 4.8 µm, or 5.0 µm, etc. Of course, other values within the above ranges are also possible and are not limited herein. In the present invention, controlling the average particle size of the primary particles within the above range can reduce the impedance of the cathode material, improve lithium ion transport efficiency, and help enhance the capacity of the cathode material.

In some embodiments, the cathode material is a single-crystal material, and the cathode material comprises single-crystal particles, wherein the single-crystal particles are particles with the same orientation. It should be specially noted that the "single-crystal material" as known to those skilled in the art is not a "single crystal" in the strict sense. Crystallographically, an ideal single crystal refers to a crystal that completely has the same arrangement and orientation. However, limited by impurities, strain, and crystal defects, ideal single crystals are very rare and difficult to produce in practice. Therefore, the commonly known material in the art, a single-crystal material, is actually more of a "single-crystal like morphology" cathode material, which only exhibits, in terms of size, a large particle dimension similar to a single crystal, distinguishing it from polycrystalline particles composed of numerous small particles.

In the present invention, a single crystal grain can be a single particle composed of one primary particle. The above single-crystal cathode material may also have a small number of "quasi-secondary particles" formed by the adhesion of several primary particles. "Primary particles" refer to the smallest particle units identified when observing the cathode active material using a scanning electron microscope.

It should be noted that the difference between a single-crystal cathode material and a polycrystalline cathode material (i.e., polycrystalline secondary particles) is that the smallest particles of the polycrystalline secondary particles are secondary particles formed by agglomeration of nanoscale particles. In contrast, the smallest particles of a single-crystal cathode material are typically micron-scale individual particles. Generally speaking, in addition to EBSD testing methods, characterization methods such as scanning electron microscopy (SEM) can also be used to determine whether the obtained cathode product is a single-crystal material. For example, for a single-crystal cathode material, the morphology of single-crystal particles can be characterized by SEM, showing that the single-crystal particles generally appear as regular or irregular spheres without significant particle agglomeration. The orientation of the single-crystal cathode material can also be characterized by EBSD. It can be observed through EBSD that the color within at least one grain is the same, indicating that the orientation within at least one grain is the same, and grains with the same orientation are single crystals. It should be specially noted that the "single-crystal cathode material" as known to those skilled in the art is not a "single crystal" in the strict crystallographic sense. Crystallographically, an ideal single crystal refers to a crystal that completely has the same arrangement and orientation. However, limited by impurities, strain, and crystal defects, ideal single crystals are very rare and difficult to produce in a laboratory. Therefore, the commonly known single-crystal cathode material in the art is actually more of a "single-crystal like morphology" cathode material, which only exhibits, in terms of size, a large particle dimension similar to a single crystal, distinguishing it from a polycrystal composed of numerous small primary particles.

In some embodiments, the cathode material is made into a mold battery, and the mold battery is characterized by in-situ XRD. During the first charge-discharge cycle, the structural recovery degree δ of the cathode material satisfies: 100.00% ≥ δ ≥ 99.70%; wherein δ = θ1/θ2 × 100%, θ1 is the diffraction angle of the (003) crystal plane diffraction peak of the cathode material measured by X-ray diffraction at the beginning of the first charge, and θ2 is the diffraction angle of the (003) crystal plane diffraction peak of the cathode material measured by X-ray diffraction at the end of the first discharge. Specifically, δ can specifically be 99.7%, 99.8%, 99.85%, 99.9%, 99.95%, or 100.00%, etc. Of course, other values within the above range are also possible and are not limited herein. It can be understood that when the structural recovery degree of the cathode material is controlled within the above range, it can be seen that the crystal structure of the cathode material can remain stable during the charge-discharge cycling process, the irreversible phase transition of the cathode material is reduced, and the degradation of the lattice structure is greatly improved, which is beneficial for maintaining the cyclic structural stability of the cathode material.

In some embodiments, the specific surface area of the cathode material is 0.5 m²/g to 1.5 m²/g. Specifically, it can be 0.5 m²/g, 0.6 m²/g, 0.8 m²/g, 1.0 m²/g, 1.1 m²/g, 1.2 m²/g, 1.3 m²/g, 1.4 m²/g, or 1.5 m²/g, etc. Of course, other values within the above ranges are also possible and are not limited herein. By controlling the specific surface area of the cathode material within the above range, the cathode material can exhibit relatively high capacity, initial Coulombic efficiency, cycling stability, and low gas generation.

In some embodiments, the tap density of the cathode material is 1.0 g/cm³ to 3.0 g/cm³. Specifically, it can be 1.0 g/cm³, 1.2 g/cm³, 1.3 g/cm³, 1.4 g/cm³, 1.5 g/cm³, 1.6 g/cm³, 1.7 g/cm³, 1.8 g/cm³, 1.9 g/cm³, 2.0 g/cm³, 2.1 g/cm³, 2.2 g/cm³, 2.4 g/cm³, 2.5 g/cm³, 2.8 g/cm³, or 3.0 g/cm³, etc. Of course, other values within the above ranges are also possible and are not limited herein. Controlling the tap density of the cathode material within the above range is beneficial for improving the processing performance of the material and increasing the energy density of the battery.

In some embodiments, the compaction density of the cathode material is 2.5 g/cm³ to 3.5 g/cm³. Specifically, it can be 2.5 g/cm³, 2.6 g/cm³, 2.7 g/cm³, 2.8 g/cm³, 2.9 g/cm³, 3.0 g/cm³, 3.1 g/cm³, 3.2 g/cm³, 3.4 g/cm³, or 3.5 g/cm³, etc. Of course, other values within the above ranges are also possible and are not limited herein. Controlling the compacted density of the cathode material within the above range is beneficial for increasing the energy density of the battery.

In some embodiments, the apparent density of the cathode material is 0.5 g/cm³ to 1.5 g/cm³. Specifically, it can be 0.5 g/cm³, 0.6 g/cm³, 0.7 g/cm³, 0.8 g/cm³, 0.9 g/cm³, 1.0 g/cm³, 1.1 g/cm³, 1.2 g/cm³, 1.4 g/cm³, or 1.5 g/cm³, etc. Of course, other values within the above ranges are also possible and are not limited herein. Controlling the apparent density of the cathode material within the above range is beneficial for increasing the energy density of the battery.

In some embodiments, after the cathode material is made into a coin cell and subjected to one charge-discharge cycle, the cathode material is characterized by XPS, and in the XPS spectrum of the cathode material, the cathode material has a Li₂O phase. Thus, the presence of a Li₂O phase in the cathode material after cycling as characterized by XPS indicates that the free nitrate ions present in the cathode material can react with the active lithium ions to induce the formation of Li₂O on the surface of the cathode material. In some embodiments, in the XPS spectrum of the cathode material, the cathode material has a characteristic peak at a binding energy between 53.5 eV and 55 eV.

It should be noted that the preparation method for the above coin cell is as follows:
Batching: NCM:SP:5% PVDF adhesive solution = 93:5:2 = 9.3 g:0.5 g:4.0 g, NMP = 9 g, followed by high-speed stirring until uniform dispersion.

Coating and drying: A slurry was uniformly coated onto a 20-µm-thick aluminum foil using a 210µm coater, setting the coating length to the maximum length of the coater. The electrode sheet was cut into two equal sections, and the latter half was transferred to a blast drying oven and dried at 100 °C for at least 1.5 hours.

Rolling, punching, and drying: During rolling, adjusting the roll gap of a double-roll machine to 1 and rolling 3 times, punching using a 14 mm punching machine, and after weighing, placing into a vacuum drying oven for vacuum drying at 85°C for more than 8 hours.

Coin cell (LIR2016) assembly: Cathode case - 2 drops of electrolyte - cathode sheet (14 mm) - 3 drops of electrolyte - 20 µm separator - 2 drops of electrolyte - φ16*1.0 mm lithium sheet - 150 µm foam nickel - anode case (dried at 50°C). After the battery is assembled, sealing it, and removing it from a glove box for testing. After standing for 12 hours, charging the coin cell at 0.1C and discharging it at 0.1C for one cycle.

XPS characterization of the cathode material after cycling: disassembling the coin cell after charging it at 0.1C and discharging it at 0.1C for one cycle, removing the cathode sheet, scraping the powder material from the surface of the cathode sheet using a scraper, characterizing the scraped powder material by XPS spectroscopy, thereby obtaining an XPS spectrum.

In second aspect, the present invention provides a method for preparing a cathode material, comprising the following steps:
S10, subjecting a hydroxide precursor of the cathode material to a nitric acid annealing treatment to obtain an oxide precursor containing nitrate ions;
S20, subjecting a mixture comprising the oxide precursor containing nitrate ions and a lithium source to a primary sintering treatment, and crushing the primary sintered product to obtain a cathode material, wherein the mass concentration of free nitrate ions in the cathode material is Q ppm, where 10 ≤ Q ≤ 100; and the number fraction of particles with a particle size of less than 1 µm in the cathode material is R%, where 8 ≤ R ≤ 16.

In the method for preparing a cathode material provided by the present invention, a hydroxide precursor of the cathode material is subjected to a nitric acid annealing treatment to obtain an oxide precursor containing nitrate ions. Herein, the nitric acid annealing treatment refers to annealing after being held for a certain period of time in a nitric acid atmosphere, so that the oxide precursor contains an appropriate amount of the nitrate ions. A mixture comprising the oxide precursor containing nitrate ions and a lithium source is subjected to a primary sintering treatment. The reactivity of the oxide precursor during the primary sintering process is lower than that of the hydroxide precursor, which is beneficial for the uniform growth of primary particles, increasing the particle size of the primary particles, and reducing the number fraction of particles with a particle size of less than 1 µm. In the cathode material prepared by the present invention, the mass concentration of the free nitrate ions is between 10 ppm and 100 ppm, while controlling the number fraction of the particles with a particle size of less than 1 µm in the cathode material to be between 8% and 16%. An appropriate amount of small particles can improve the packing tightness between cathode material particles without causing excessive side reactions, can improve lithium ion transport, reduce the internal resistance of the cathode material, lower the lithium ion transport barrier, and enhance the lithium intercalation and deintercalation efficiency of the cathode material. Under the synergistic effect of an appropriate amount of the free nitrate ions and the particles with a particle size of less than 1 µm, the high-voltage resistance and high capacity of the cathode material can be improved, while the lithium ion transport efficiency of the cathode material is enhanced, and the cycling stability of the cathode material is improved.

The preparation method of the present invention is described in detail below with reference to examples:
Before step S10, the above method further comprises:
S01: Preparing a salt solution of nickel, manganese and element N, preparing a mixed solution according to a certain stoichiometric ratio, adjusting the pH value of the mixed solution, and obtaining a hydroxide precursor of the cathode material by a coprecipitation method. Element N can be Mn and/or Al.

In some embodiments, the stoichiometric ratio range among nickel, cobalt, and element N satisfies the following conditions: 0.5 ≤ Ni < 1, 0 < Co ≤ 0.2, 0 < N ≤ 0.4; and the molar ratio of Ni:Co:N can specifically be 0.60:0.10:0.30, 0.67:0.05:0.28, or 0.90:0.5:0.05, etc. Element N can be Mn and/or Al.

In some embodiments, the salt solution is a sulfate solution. Compared with conventional coprecipitation methods, the present invention uses a sulfate system to prepare a hydroxide precursor.

In some embodiments, the pH value of the mixed solution is 7-14, and can specifically be 7, 7.5, 8, 8.5, 9, 9.5, 10, 11, 12, 13, or 14, etc. Of course, other values within the above range are also possible and are not limited herein.

In some embodiments, a regulator used in the coprecipitation method can be ammonia water, citric acid, ethylene glycol, etc., thereby facilitating the precipitation and separation of the hydroxide from the mixed solution.

In other embodiments, before step S10, The salts in the mixed solution can also be converted into oxide precursor via spray pyrolysis method.

In other embodiments, a commercially available hydroxide precursor may also be used.

S10, subjecting a hydroxide precursor of the cathode material to a nitric acid annealing treatment to obtain an oxide precursor containing nitrate ions.

In some embodiments, the nitric acid annealing treatment is carried out by holding for a certain period of time under a mixed atmosphere containing nitric acid for annealing treatment.

In some embodiments, the volume concentration of nitric acid in the mixed atmosphere is 1%-3%; and specifically, it can be 1%, 1.5%, 2%, 2.5%, 2.8%, or 3.0%, etc. Of course, other values within the above range are also possible and are not limited herein.

In some embodiments, the mass concentration of oxygen in the mixed atmosphere is < 1.0 ppm. Excess oxygen causes excessively rapid grain growth of the oxide precursor, which is not conducive to maintaining the uniformity of precursor particles and leads to a reduction in the reactivity of the oxide precursor.

In some embodiments, the mixed atmosphere comprises nitric acid vapor and water vapor.

In some embodiments, the temperature of the nitric acid annealing treatment is 200°C to 800°C, and can specifically be 200°C, 250°C, 300°C, 350°C, 480°C, 550°C, 600°C, 630°C, 650°C, 680°C, 700°C, 750°C, 780°C, or 800°C, etc. Of course, other values within the above range are also possible and are not limited herein.

In some embodiments, the heating rate of the nitric acid annealing treatment is 0.5°C/min to 3°C/min, and can specifically be 0.5°C/min, 0.8°C/min, 1.0°C/min, 1.5°C/min, 1.8°C/min, 2.0°C/min, 2.5°C/min, or 3.0°C/min, etc. Of course, other values within the above range are also possible and are not limited herein.

In some embodiments, the holding time of the nitric acid annealing treatment is 3 h to 10 h, and can specifically be 3 h, 4 h, 5 h, 6 h, 7 h, 8 h, 9 h, or 10 h, etc. Of course, other values within the above range are also possible and are not limited herein.

In some embodiments, the ambient pressure during the nitric acid annealing treatment is lower than the pressure of the mixed atmosphere.

In some embodiments, the ambient pressure during the nitric acid annealing treatment is 2.0 kPa to 4.0 kPa, and can specifically be 2.0 kPa, 2.2 kPa, 2.5 kPa, 2.8 kPa, 3.0 kPa, 3.2 kPa, 3.5 kPa, or 4.0 kPa, etc. Of course, other values within the above range are also possible and are not limited herein.

In the present invention, by controlling process parameters such as ambient pressure, holding time, and annealing temperature during the nitric acid annealing treatment, it is beneficial to form an appropriate amount of nitrate ions on the surface of the oxide precursor.

In some embodiments, the oxide precursor of the cathode material has the general chemical formula NiₐCo_{b}N_{c}MₑO, wherein 0 < a < 1, 0 < b < 1, 0 < c < 1, 0 ≤ e < 1, and a + b + c + e = 1, N comprises at least one of Mn and Al, and M comprises at least one of Zr, Mg, W, Mo, Ti, Ba, Sr, Cr, Zn, Y, V, Cu, B, and Nb.

Compared with a hydroxide precursor, an oxide precursor containing nitrate ions has lower reactivity. During the sintering process of the oxide precursor with a lithium salt, the diffusion resistance of the lithium salt is slightly higher, which facilitates the formation of an appropriate amount of primary particles with a smaller particle size, thereby increasing the compaction density of the cathode material.

S20, subjecting a mixture comprising the oxide precursor containing nitrate ions and a lithium source to a primary sintering treatment, and crushing the primary sintered product to obtain a cathode material.

In some embodiments, the lithium source comprises at least one of lithium hydroxide, lithium carbonate, lithium nitrate, lithium acetate, lithium sulfate, and lithium oxalate. Preferably, the lithium salt is lithium carbonate.

In some embodiments, the amounts of the lithium source and the oxide precursor added satisfy: the molar ratio of Li to the total molar amount of all metals in the oxide precursor is (0.87-1.25):1, and can specifically be 0.87:1, 0.89:1, 0.92:1, 0.95:1, 0.98:1, 1.02:1, 1.05:1, 1.1:1, 1.17:1, or 1.25:1, etc. Of course, other values within the above range are also possible and are not limited herein.

In some embodiments, the mixture further comprises a dopant containing metal M, where metal M comprises at least one of Zr, Mg, Ti, Ba, Sr, Cr, Zn, V, Cu, Nb, Mo, Y, and W. Specifically, the dopant can be a salt or oxide containing metal M.

In some embodiments, the dopant comprises at least one of Nb₂O₅, Nb₂O₃, MoO₃, WO₂, WO₃, V₂O₅, V₂O₃, Sr(OH)₂, SrO, SrCO₃, TiO₂, ZrO₂, Zr(OH)₄, Y₂O₃, BaO, Cr₂O₃, ZnO, CuO, Ta₂O₅, CaO, Sb₂O₃, Sb₂O₅, H₃BO₃, MgO and Mg(OH)₂. Preferably, the dopant containing metal M is a compound of Zr or Ti.

In some embodiments, the mixing condition for obtaining the mixture is: solid-phase mixing at 10°C to 50°C for 0.3 hour to 3 hours.

In some embodiments, the solid-phase mixing temperature can be 10°C, 15°C, 20°C, 25°C, 30°C, 35°C, 40°C, 45°C, or 50°C, and the solid-phase mixing time can be 0.3 h, 0.4 h, 0.5 h, 0.6 h, 0.8 h, 1 h, 1.5 h, 1.8 h, 2.5 h, or 3 h, etc. Of course, other values within the above range are also possible and are not limited herein. Preferably, the solid-phase mixing temperature is 10°C to 35°C.

In some embodiments, the mixing equipment can be at least one of a ball mill, a three-dimensional mixer, a high-speed mixer, and a VC mixer.

In some embodiments, the primary sintering treatment comprises sequentially a first temperature raising stage, a second temperature raising stage, a first temperature lowering stage, and a third constant-temperature stage. The temperature of the first temperature raising stage is 300°C to 600°C, the temperature of the second temperature raising stage is 720°C to 1000°C, the temperature of the first temperature lowering stage is 500°C to 700°C, and the temperature of the third constant-temperature stage is 720°C to 1000°C.

In some embodiments, the temperature of the first temperature raising stage can specifically be 300°C, 350°C, 380°C, 400°C, 430°C, 450°C, 500°C, 550°C, 580°C, or 600°C, etc. The duration of the first temperature raising stage is 3 hours to 5 hours, and can specifically be 3 hours, 3.5 hours, 4 hours, 4.5 hours, or 5 hours, etc., but is not limited to the listed values, and other unlisted values within this numerical range are equally applicable. The temperature in the first temperature raising stage is relatively low, at which the lithium source can be sufficiently melted and react with the oxide precursor.

In some embodiments, the heating rate of the first temperature raising stage is 15°C/min to 20°C/min, and can specifically be 15°C/min, 16°C/min, 17°C/min, 18°C/min, 19°C/min, or 20°C/min, etc. Of course, other values within the above range are also possible and are not limited herein.

In some embodiments, the temperature of the second temperature raising stage can specifically be 720°C, 770°C, 800°C, 880°C, 900°C, or 1000°C, etc., but is not limited to the listed values, and other unlisted values within this numerical range are equally applicable. The duration of the second temperature raising stage is 4 hours to 12 hours, and can specifically be 4 hours, 5 hours, 6 hours, 8 hours, 9 hours, 10 hours, 11 hours, or 12 hours, etc., but is not limited to the listed values, and other unlisted values within this numerical range are equally applicable. In the second temperature raising stage, a crystal of the cathode material initially grows while excessive growth of particles is reduced.

In some embodiments, the heating rate of the second temperature raising stage is 0.5°C/min to 3°C/min, and can specifically be 0.5°C/min, 0.6°C/min, 0.7°C/min, 1.0°C/min, 1.2°C/min, 1.5°C/min, 2.0°C/min, 2.2°C/min, 2.5°C/min, 2.8°C/min, or 3°C/min, etc. Of course, other values within the above range are also possible and are not limited herein.

In some embodiments, the temperature of the first temperature lowering stage can specifically be 500°C, 550°C, 580°C, 600°C, 620°C, 650°C, 680°C, 690°C, or 700°C, etc., but is not limited to the listed values, and other unlisted values within this numerical range are equally applicable. The duration of the first temperature lowering stage is 2 hours to 6 hours, and can specifically be 2 hours, 3 hours, 4 hours, 5 hours, 5.5 hours, or 6 hours, etc., but is not limited to the listed values, and other unlisted values within this numerical range are equally applicable. This temperature lowering process allows surface atoms of the grown primary particles to rearrange, forming a surface structure with lower free energy and higher chemical stability.

In some embodiments, the cooling rate of the first temperature lowering stage is 0.5°C/min to 3°C/min, and can specifically be 0.5°C/min, 0.6°C/min, 0.7°C/min, 1.0°C/min, 1.2°C/min, 1.5°C/min, 2.0°C/min, 2.2°C/min, 2.5°C/min, 2.8°C/min, or 3°C/min, etc. Of course, other values within the above range are also possible and are not limited herein.

In some embodiments, the temperature of the third constant-temperature stage can specifically be 720°C, 770°C, 800°C, 880°C, 900°C, or 1000°C, etc., but is not limited to the listed values, and other unlisted values within this numerical range are equally applicable. The duration of the third constant-temperature stage is 1 hour to 3 hours, and can specifically be 1 hour, 1.5 hours, 2 hours, 2.5 hours, or 3 hours, etc., but is not limited to the listed values, and other unlisted values within this numerical range are equally applicable. In this constant-temperature stage, the crystal structure of the primary particles of the cathode material is fully grown to ensure the structural stability of the primary particles.

In some embodiments, the heating rate of the third constant-temperature stage is 0.5°C/min to 3°C/min, and can specifically be 0.5°C/min, 0.6°C/min, 0.7°C/min, 1.0°C/min, 1.2°C/min, 1.5°C/min, 2.0°C/min, 2.2°C/min, 2.5°C/min, 2.8°C/min, or 3°C/min, etc. Of course, other values within the above range are also possible and are not limited herein.

In some embodiments, after the third constant-temperature stage, the sintered product is cooled to room temperature.

In some embodiments, the primary sintering treatment is carried out in an oxygen-containing atmosphere, wherein the oxygen content in the oxygen-containing atmosphere is ≥ 95%.

In some embodiments, when the dopant containing metal M is a compound of Zr or Ti, the temperature of the primary sintering treatment is 800°C to 900°C, and the holding time is 8 hours to 10 hours.

In some embodiments, the method further comprises: mixing the crushed base material with a coating agent containing metal M, followed by a secondary sintering treatment to obtain the cathode material.

In some embodiments, the crushing method comprises at least one of a double roller, a plow blade mixer/crusher, and an air flow crusher.

In some embodiments, for the coating agent containing metal M, M is selected from at least one of Zr, Mg, Ti, Ba, Sr, Cr, Zn, V, Cu, Nb, Mo, Y, and W. The coating agent containing metal M can be a salt or oxide of metal M. Preferably, the coating agent containing metal M comprises a compound of Nb and/or a compound of W.

In some embodiments, the secondary sintering treatment is carried out in an oxygen-containing atmosphere, wherein the oxygen content in the oxygen-containing atmosphere is ≥ 95%.

In some embodiments, the temperature of the secondary sintering treatment is 300°C to 800°C, and can specifically be 300°C, 320°C, 330°C, 350°C, 380°C, 400°C, 450°C, 500°C, 550°C, 650°C, 700°C, or 800°C, etc., but is not limited to the listed values, and other unlisted values within this numerical range are equally applicable.

In some embodiments, the holding time of the secondary sintering treatment is 6 hours to 24 hours, and can specifically be 6 hours, 8 hours, 10 hours, 12 hours, 15 hours, 18 hours, or 24 hours, etc., but is not limited to the listed values, and other unlisted values within this numerical range are equally applicable.

In some embodiments, when the coating agent containing metal M comprises a compound of Nb and/or a compound of W, the temperature of the secondary sintering treatment is 500°C to 600°C, and the holding time of the secondary sintering treatment is 6 hours to 8 hours.

In some embodiments, the preparation method further comprises cooling, shaping, and sieving the product after the secondary sintering treatment. The shaping comprises at least one of crushing, grinding, ball milling, or air crushing.

In some embodiments, the mesh number of the screen used for sieving is 300 to 400 mesh.

In third aspect, the present invention provides a battery comprising the cathode material according to the first aspect described above or the cathode material prepared by the method for preparing the cathode material described above.

The battery provided in the present invention can be a secondary battery (e.g., a lithium-ion battery, a sodium-ion battery, etc.), comprising a case, an electrode assembly, and an electrolyte. Both the electrode assembly and the electrolyte are located within the case. The case may be a packaging bag formed by encapsulating with a packaging film (e.g., aluminum-plastic film), for example, when the secondary battery is a pouch battery.

In other embodiments, the secondary battery can also be a steel-case battery, an aluminum-case battery, etc.

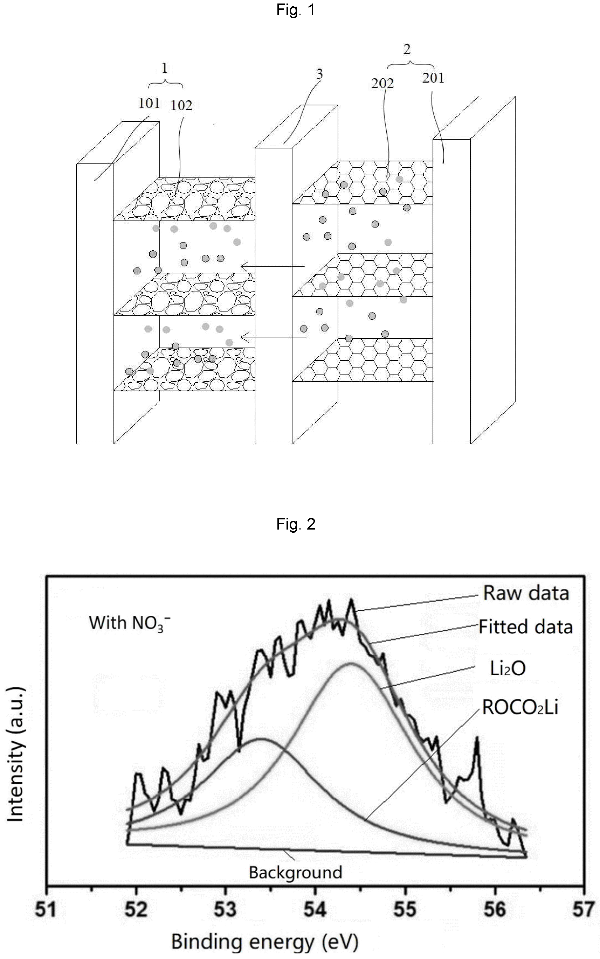

Fig. 1 is a schematic diagram showing the discharge state of a battery provided in an embodiment of the present invention. As shown in Fig. 1, the battery comprises a case and an electrode assembly. The electrode assembly comprises a cathode sheet 1, an anode sheet 2, and a separator 3. The separator 3 is disposed between the cathode sheet 1 and the anode sheet 2. The electrode assembly can have a stacked structure formed by sequentially and alternately stacking the cathode sheet 1, the separator 3, and the anode sheet 2.

In other embodiments, the electrode assembly can also have a wound structure formed by sequentially stacking and then winding the cathode sheet, the separator, and the anode sheet.

In some embodiments, the cathode sheet 1 comprises a cathode current collector 11 and a cathode active material layer 12 provided on at least one surface of the cathode current collector 11.

In some embodiments, the cathode current collector 11 can be made of an aluminum foil or a nickel foil, etc., or can be any composite current collector disclosed in the prior art, for example, but not limited to, a current collector formed by combining the aforementioned conductive foil (aluminum foil or nickel foil, etc.) with a polymer substrate. The cathode active material layer 12 comprises a cathode active material, a conductive agent, and a binder, wherein the cathode active material is the cathode material according to the first aspect described above or the cathode material prepared by the method for preparing the cathode material described above.

In some embodiments, the anode sheet 2 comprises an anode current collector 21 and an anode active material layer 22 provided on at least one surface of the anode current collector.

In some embodiments, the anode current collector 21 can be made of at least one of a copper foil, a nickel foil, a stainless steel foil, a titanium foil, or a carbon-based current collector, etc., or can be any composite current collector disclosed in the prior art, for example, but not limited to, a current collector formed by combining the aforementioned conductive foil with a polymer substrate.

In some embodiments, the anode active material layer 22 comprises an anode material, and the anode material includes, but is not limited to, artificial graphite, natural graphite, soft carbon, hard carbon, silicon-based materials, tin-based materials, and lithium titanate, etc. The silicon-based material may be selected from at least one of elemental silicon, silicon oxide compounds, silicon-carbon composites, silicon-nitrogen composites, and silicon alloys. The tin-based material may be selected from at least one of elemental tin, tin oxide compounds, and tin alloys. However, the present invention is not limited to these materials, and other conventional materials that can be used as anode active materials of a battery may also be used. These anode active materials may be used alone or in combination of two or more.

The battery provided in the embodiments of the present invention has the advantages of high capacity, high initial Coulombic efficiency, long cycle life, excellent rate performance, and low expansion. The battery may be a lithium-ion battery, a sodium-ion battery, a solid electrolyte battery, etc., which is not limited herein.

The embodiments of the present invention are further described below by way of multiple embodiments. However, the embodiments of the present invention are not limited to the following specific embodiments. Implementation may be appropriately modified without departing from the scope of the independent claim.

### Test Methods:

### (1) Test for free nitrate ion content in cathode material

1. Weighing approximately 0.7 g of sample (denoted as M) into a 70 mL beaker with an accuracy of 0.0001 g;
2. Accurately measuring 50 mL of ultra-pure water (denoted as V) using a 50 mL volumetric flask, adding a small amount of ultra-pure water (about 7 mL) to the sample first, stirring well with a glass rod, adding the remaining ultra-pure water, stirring well, then ultrasonicating for 3 min, and allowing the sample to settle by standing for about 17 min;
3. Drawing the supernatant of the sample with a 1 mL sterile syringe, injecting it into an ion chromatograph through a disposable filter head for testing; ion chromatograph model: Thermo Scientific Dionex ICS-6000; setting chromatographic conditions as follows: eluent concentration: 25 mmol/L; eluent flow rate: 0.3 mL/min; column temperature: 30±1°C; detection cell temperature: 35±1°C; suppressor current: 26 mA; chromatographic column: anion exchange column (4×250 mm, AS11-HC); and data acquisition: clicking "Data Acquisition" to start the analysis after the baseline becomes stable (signal value change less than 0.1 µS/20 min), and obtaining the concentration of element i in the sample, denoted as Ci.
4. Calculating the results: the calculation formula is Q = Ci × V / M, where Q is the content of element i in the sample (mg/kg); Ci is the concentration of element i in the sample solution (mg/L); V is the volume of the sample solution (mL); and M is the mass of the sample (g). In anion testing, by measuring the content of element N, the content of nitrate ion (NO₃⁻) can be obtained through conversion based on the ionic molecular weight. The method for analyzing free sulfate ion content is the same as that for nitrate ion content.

### (2) Number fraction of particles with particle size less than 1 µm in cathode material

1) Dipping a small amount of powder sample with a cotton swab, applying the sample uniformly and densely on a conductive adhesive, blowing slowly with a hair dryer toward the direction without other samples, and forcefully blowing for more than 10 times until no stacked residual powder remains after confirming uniform invention on the surface;
2) Setting the basic SEM conditions: voltage 5 kV, current 12 mA, magnification 2000×, adjusting the contrast and brightness using the auto key, randomly selecting 10 regions each containing 400 to 1200 particles, and taking scanning electron microscope (SEM) images; and
3) Importing the SEM images obtained in step (2) into Metis Vision software, clicking "Recognize All" on the software interface, thereby obtaining the particle size number distribution data and particle size number distribution graph, and thus obtaining the number fraction R% of particles with a particle size of less than 1 µm in the cathode material.

### (3) ICP test method for cathode material:

Equipment: Agilent 5110 ICP-OES inductively coupled plasma optical emission spectrometer.

Method: taking 0.3 g of the sample, adding aqua regia for digestion, cooling and diluting to a constant volume of 100 mL to obtain a stock solution, taking 1 mL of the stock solution, diluting it 100-fold, and testing the contents of the main elements Li/Ni/Co/Mn/Al, then testing the content of impurity elements using the stock solution.

### (4) Particle size test method for cathode material:

Using a Malvern laser particle size analyzer to test the particle size distribution range of the cathode material, thereby obtaining D90, D50, and D10, wherein D90 refers to the particle size corresponding to a cumulative volume fraction of 90%, D50 refers to the particle size corresponding to a cumulative volume fraction of 50%, and D10 refers to the particle size corresponding to a cumulative volume fraction of 10%. Span = (D90 - D10)/D50.

Specifically: taking an appropriate amount of the sample, pouring it into pure water for ultrasonic dispersion at an ultrasonic power of 240 W for 30 seconds, adding an appropriate amount of sodium hexametaphosphate to the dispersed sample, stirring well, pouring into the sample cell of the testing apparatus, waiting for 10 seconds, and then clicking "Start" to perform the sample test.

### (5) Average primary particle size of cathode material

Using a Hitachi S4800 scanning electron microscope, randomly capturing 5 images of the sample at different locations at a magnification of 3000×, and using Nano Measure software, measuring the maximum diameter of single-crystal particles that are completely visible within the SEM image field of view, and calculating the average value, which is the average primary particle size. "Completely visible within the SEM image field of view" means that the contour of the single-crystal particle is fully displayed in the SEM image, and the contour of the single-crystal particle is neither covered by other single-crystal particles in the field of view nor divided by the boundaries of the SEM image. The "maximum diameter of single-crystal particles" refers to the diameter of the circumscribed circle of the single-crystal particles in the SEM image.

### (6) Specific surface area test method for cathode material:

Equipment: using a Micromeritics Tristar 3020 specific surface area and pore size analyzer to test the specific surface area of the cathode material.

Method: weighing the mass of the empty sample tube as m1; taking 3 g of the sample, adding it to the sample tube through a long-stem funnel; degassing under vacuum at 300°C for 1 hour, cooling, and then weighing the mass of the sample tube as m2; the sample mass is m = m2 - m1. Placing the sample tube in liquid nitrogen, measuring the nitrogen adsorption amount V of the sample under a series of relative pressures P/P0 to obtain an adsorption isotherm. Here, P/P0 is set to 0.05/0.1/0.15/0.20/0.25/0.30. Fitting the isothermal adsorption curve, calculating the monolayer saturated adsorption amount Vm based on the slope and intercept, and then calculating the specific surface area based on Vm.

### (7) Quantachrome tap density test for cathode material:

Equipment: using a Quantachrome tap density tester (model: DAT-4-220).

Method: cleaning the graduated cylinder, then weighing the mass of the graduated cylinder as m1; adding about 50 g of the sample to the graduated cylinder, making the sample surface as horizontal as possible, and wiping the surroundings with a tissue; weighing the total mass of the sample and the graduated cylinder as m2; placing the graduated cylinder on the vibrating table, fixing it with three symmetrical fixing feet; turning on the instrument, setting the number of vibrations to 5000 times; turning on the vibration switch, and the instrument automatically stopping after reaching the set number of vibrations; removing the graduated cylinder, and reading the sample volume. If the sample surface is horizontal after tapping, directly reading the volume; if it is inclined, taking the average of the readings at the highest and lowest points as V; and tap density = (m2 - m1)/V.

### (8) Compaction density test for cathode material:

Using a Carver 4350 (USA) to test the compaction density of the cathode material, the steps being: weighing 1 g of the sample, placing it into a mold, pressing at 3 T for 30 seconds, and after pressing, measuring the height to calculate the compaction density.

### (9) Apparent density test for cathode material:

Equipment: Beijing Zheyuan apparent density tester BT101
Method: taking an appropriate amount of the sample, allowing it to flow naturally into a cloth box, alternately pass through four glass plates with an inclination angle of 25° and a square funnel inside the cloth box, and flow into a cylindrical cup of known volume (25 mL), and finally weighing the mass of the powder in the cylindrical cup.

### (10) Electrochemical performance test:

Assembling the cathode materials obtained from the embodiments and comparative examples into coin cells: adding the cathode material, conductive carbon, and polyvinylidene fluoride (PVDF) in a mass ratio of 96:2:2 to N-methyl-2-pyrrolidone (NMP), uniformly mixing to prepare a cathode slurry, coating onto a cathode current collector, vacuum drying to form a cathode sheet (with a compaction density of 2.8 g/cm³), using a lithium sheet as the anode, and assembling into 2016 coin cells in a glove box.

Standing the assembled coin half-cells for 12 hours, then using a LAND battery testing system to test the capacity and cycling performance at 25°C and 3.0-4.45 V, with the nominal capacity of 1C set to 200 mAh/g. Cycling at 0.5C for charging and 1C for discharging for 50 cycles, and defining the ratio of the discharge capacity at the 50th cycle to the discharge capacity at the 1st cycle as the 50-cycle capacity retention rate.

Specific discharge capacity test method:
Using a CT3002A battery testing system to test the assembled coin half-cells, conducting charge-discharge tests at a rate of 0.3C/0.3C, within a discharge range of 3.0 V-4.3 V, at 25°C, thereby obtaining the specific discharge capacities at 0.1C (discharge capacity/mass), 1C, and 2C.

Initial Coulombic efficiency test method: using a CT3002A battery testing system to test the above coin cells, charging and discharging once at a rate of 0.1C/0.1C, and testing to obtain the specific discharge capacity and specific charge capacity. Initial Coulombic efficiency = specific discharge capacity / specific charge capacity.

### (11) Structural recovery degree test:

Using an electrochemical in situ XRD (Bruker D8 Advance with Cu target) in combination with a LAND (5 mA, 5 V) device to test the structural changes during charge-discharge processes within a charge-discharge voltage range of 2.8 V to 4.35 V; then using Jade software to fit the XRD patterns to obtain the diffraction angles corresponding to the (003) peak at the beginning and end of charge-discharge.

Specifically, assembling the cathode materials prepared in the above embodiments and comparative examples into mold batteries respectively, wherein the case of the mold battery is provided by the Bruker in situ XRD device, and the case is provided with a window allowing X-rays from the XRD device to pass through. The specific procedure is as follows: weighing the cathode material, conductive carbon black, and PVDF in a mass ratio of 93:5:2, adding N-methyl-2-pyrrolidone (NMP) at a solid content of 50%, dispersing into a viscous slurry using a high-speed disperser, uniformly coating onto an aluminum foil using a 200 µm scraper, baking in an oven at 80°C for 30 min, then rolling, punching into cathode sheets with a diameter of 14 mm, placing again into an oven and baking at 80°C for 8 hours. Using the prepared cathode sheet, a 16 mm lithium sheet as an anode sheet, a Celgard polypropylene membrane as a separator, a carbonate solution of 1 mol/L LiPF6 as an electrolyte, and the case provided by the XRD device as the case of the mold battery, assembling in an argon-filled glove box to obtain the mold battery. Conducting charge-discharge tests on the mold battery at 25°C and 2.5 V-4.35 V, and characterizing the change of the (003) peak of the cathode material during one cycle by the electrochemical in-situ XRD, wherein θ1 is the diffraction angle of the (003) crystal plane diffraction peak of the cathode material measured by X-ray diffraction at the beginning of the first charge, and θ2 is the diffraction angle of the (003) crystal plane diffraction peak of the cathode material measured by X-ray diffraction at the end of the first discharge.

### Embodiment 1

(1) Metallic nickel, metallic manganese, and metallic cobalt were respectively dissolved in sulfuric acid to form sulfate solutions. The three solutions were prepared into a mixed solution with a total concentration of Ni, Co, and Mn of 2 mol/L according to a stoichiometric ratio of Ni:Co:Mn = 6:1:3. A NaOH solution with a concentration of 1 mol/L and an ammonia water with a concentration of 0.5 mol/L were continuously introduced into the mixed solution, and the pH value was controlled within the range of 11±0.2. When the D₅₀ reached 8 µm, the reaction was stopped, and the precipitate was centrifuged, washed, and dried to obtain a hydroxide precursor of a cathode material.
(2) The hydroxide precursor of the cathode material was placed in an atmosphere with a nitric acid concentration of 2% and subjected to a nitric acid annealing treatment. The atmosphere contained only HNO₃ and H₂O, with an O₂ content of <1.0 ppm. The temperature was raised to 600°C at a heating rate of 2°C/min and held for 6 hours for annealing. During the annealing process, the gas pressure of the reaction environment was controlled at 3.0 kPa to produce an oxide precursor having the general chemical formula Ni_{0.6}Co_{0.1}Mn_{0.3}Oₓ (the content deviation of each element was within ±1%).
(3) The oxide precursor was mixed with Li₂CO₃ at a Li/Me (where Me is the sum of Ni, Co, and Mn) molar ratio of 1.02:1, and ZrO₂ in the mass concentration of 2000 ppm relative to the oxide precursor was added. The mixture was placed in an atmosphere electric furnace or a Joule heating reactor under an oxygen atmosphere with a reaction pressure controlled at 10 Pa. The temperature was raised from room temperature to 500°C in the first temperature raising stage at a heating rate of 20°C/min and held for 4 hours; then raised to 700°C in the second temperature raising stage at a heating rate of 2°C/min and held for 6 hours; then lowered to 500°C in the first temperature lowering stage at a cooling rate of 1°C/min and held for 4 hours; then raised to 900°C in the third constant-temperature stage at a heating rate of 1°C/min and held for 2 hours; and finally cooled from the four-platform temperature to room temperature at a cooling rate of 2°C/min to obtain a base material.
(4) The base material was crushed and mixed with 1000 ppm of Nb₂O₅, followed by secondary sintering at 500°C for 6 hours under an oxygen atmosphere to obtain a cathode material.

The cathode material had the general chemical formula Li_{1.02}Ni_{0.6}Co_{0.1}Mn_{0.297}Zr_{0.002}Nb_{0.001}O₂.

### Embodiment 2

The difference from Embodiment 1 was that:
(1) Metallic nickel, metallic manganese, and metallic cobalt were respectively dissolved in sulfuric acid to form sulfate solutions. The three solutions were prepared into a mixed solution with a total concentration of Ni, Co, and Mn of 2 mol/L according to a stoichiometric ratio of Ni:Co:Mn=67:5:28. An appropriate amount of citric acid and ethylene glycol was added to the mixed solution, and the pH value was controlled within the range of 8±0.2. The mixture was then placed in a reaction kettle and held at 180°C for 24 hours to obtain a gel precipitate. The gel precipitate was centrifuged, washed, and dried to obtain a gel precursor.
(2) The gel precursor was placed in an atmosphere with a nitric acid concentration of 2% and subjected to a nitric acid annealing treatment. The atmosphere contained only HNO₃ and H₂O, with an O₂ content of <1.0 ppm. The temperature was raised to 600°C at a heating rate of 2°C/min and held for 6 hours for annealing. During the annealing process, the gas pressure of the reaction environment was controlled at 3.0 kPa to produce an oxide precursor having the general chemical formula Ni_{0.67}Co_{0.05}Mn_{0.28}Oₓ (the content deviation of each element was within ±1%).
(3) The oxide precursor was mixed with Li₂CO₃ at a Li/Me (where Me is the sum of Ni, Co, and Mn) molar ratio of 1.01:1, and TiO₂ in the mass concentration of 1000 ppm relative to the oxide precursor was added. The subsequent sintering process was the same as Step (3) of Embodiment 1.
(4) The base material was crushed and mixed with 1500 ppm of Al₂O₃, followed by secondary sintering at 500°C for 6 hours under an oxygen atmosphere to obtain a cathode material.

The cathode material had the general chemical formula Li_{1.01}Ni_{0.67}Co_{0.05}Mn_{0.274}Ti_{0.002}Al_{0.004}O₂.

### Embodiment 3

The difference from Embodiment 1 was that:
(1) Metallic nickel, metallic manganese, and metallic cobalt were respectively dissolved in sulfuric acid to form sulfate solutions. The three solutions were prepared into a mixed solution with a total concentration of Ni, Co, and Mn of 2 mol/L according to a stoichiometric ratio of Ni:Co:Mn = 6:1:3. An appropriate amount of ammonia water was continuously added to the mixed solution, and the pH value was controlled within the range of 7±0.2. When the D₅₀ reached 8 µm, the reaction was stopped. The obtained mixed solution was subjected to a spray pyrolysis process to obtain a hydroxide precursor of a cathode material.
(2) The hydroxide precursor of the cathode material was placed in an atmosphere with a nitric acid concentration of 3% and subjected to a nitric acid annealing treatment. The atmosphere contained only HNO₃ and H₂O, with an O₂ content of <1.0 ppm. The temperature was raised to 200°C at a heating rate of 3°C/min and held for 3 hours for annealing. During the annealing process, the gas pressure of the reaction environment was controlled at 2.0 kPa to produce an oxide precursor having the general chemical formula Ni_{0.6}Co_{0.1}Mn_{0.3}Oₓ (the content deviation of each element was within ±1%).

The cathode material had the general chemical formula Li_{1.02}Ni_{0.6}Co_{0.1}Mn_{0.297}Zr_{0.002}Nb_{0.001}O₂.

### Embodiment 4

The difference from Embodiment 1 was that:
(3) The oxide precursor was mixed with Li₂CO₃ at a Li/Me (where Me is the sum of Ni, Co, and Mn) molar ratio of 1.02:1, and ZrO₂ in the mass concentration of 2000 ppm relative to the oxide precursor was added. The mixture was placed in an atmosphere electric furnace or a Joule heating reactor under an oxygen atmosphere with a reaction pressure controlled at 10 Pa. The temperature was raised from room temperature to 300°C in the first temperature raising stage at a heating rate of 20°C/min and held for 5 hours; then raised to 900°C in the second temperature raising stage at a heating rate of 2°C/min and held for 4 hours; then lowered to 600°C in the first temperature lowering stage at a cooling rate of 1°C/min and held for 6 hours; then raised to 700°C in the third constant-temperature stage at a heating rate of 0.5°C/min and held for 6 hours; and finally cooled from the four-platform temperature to room temperature at a cooling rate of 1°C/min to obtain a base material.

The cathode material had the general chemical formula Li_{1.02}Ni_{0.6}Co_{0.1}Mn_{0.297}Zr_{0.002}Nb_{0.001}O₂.

### Embodiment 5

The difference from Embodiment 4 was that:
(1) Metallic nickel, metallic manganese, and metallic cobalt were respectively dissolved in sulfuric acid to form sulfate solutions. The three solutions were prepared into a mixed solution with a total concentration of Ni, Co, and Mn of 2 mol/L according to a stoichiometric ratio of Ni:Co:Mn=90:5:5. An appropriate amount of citric acid and ethylene glycol was added to the mixed solution, and the pH value was controlled within the range of 7-9. The mixture was then placed in a reaction kettle and held at 180 °C for 24 hours to obtain a precipitate. The precipitate was centrifuged, washed, and dried to obtain a hydroxide precursor of a cathode material.
(2) The hydroxide precursor of the cathode material was placed in an atmosphere with a nitric acid concentration of 1% and subjected to a nitric acid annealing treatment. The atmosphere contained only HNO₃ and H₂O, with an O₂ content of <1.0 ppm. The temperature was raised to 800°C at a heating rate of 0.5°C/min and held for 10 hours for annealing. During the annealing process, the gas pressure of the reaction environment was controlled at 2.0 kPa to produce an oxide precursor having the general chemical formula Ni_{0.6}Co_{0.1}Mn_{0.3}Oₓ (the content deviation of each element was within ±1%).

The cathode material had the general chemical formula Li_{1.02}Ni_{0.9}Co_{0.05}Mn_{0.046}Zr_{0.002}Nb_{0.002}O₂.

### Embodiment 6

The difference from Embodiment 4 was that:
(3) The oxide precursor was mixed with Li₂CO₃ at a Li/Me (where Me is the sum of Ni, Co, and Mn) molar ratio of 0.99:1.

The cathode material had the general chemical formula Li_{0.99}Ni_{0.6}Co_{0.1}Mn_{0.297}Zr_{0.002}Nb_{0.001}O₂.

### Embodiment 7

The difference from Embodiment 4 was that:
(1) Metallic nickel, metallic manganese, and metallic cobalt were respectively dissolved in sulfuric acid to form sulfate solutions. The three solutions were prepared into a mixed solution with a total concentration of Ni, Co, and Mn of 2 mol/L according to a stoichiometric ratio of Ni:Co:Mn=83:11:06.

### Embodiment 8

The difference from Embodiment 4 was that:
(1) Metallic nickel, metallic manganese, and metallic cobalt were respectively dissolved in sulfuric acid to form sulfate solutions. The three solutions were prepared into a mixed solution with a total concentration of Ni, Co, and Mn of 2 mol/L according to a stoichiometric ratio of Ni:Co:Mn=75:15:10.

### Embodiment 9

The difference from Embodiment 2 was that:
(2) The hydroxide precursor of the cathode material was placed in an atmosphere with a nitric acid concentration of 2% and subjected to a nitric acid annealing treatment. The atmosphere contained only HNO₃ and H₂O, with an O₂ content of <1.0 ppm. The temperature was raised to 600°C at a heating rate of 2°C/min and held for 8 hours for annealing. During the annealing process, the gas pressure of the reaction environment was controlled at 4.0 kPa to produce an oxide precursor having the general chemical formula Ni_{0.67}Co_{0.05}Mn_{0.28}Oₓ (the content deviation of each element was within ±1%).

### Embodiment 10

The difference from Embodiment 1 was that:
(3) The oxide precursor was mixed with Li₂CO₃ at a Li/Me (where Me is the sum of Ni, Co, and Mn) molar ratio of 1.02:1, and ZrO₂ in the mass concentration of 2000 ppm relative to the oxide precursor was added. The mixture was placed in an atmosphere electric furnace or a Joule heating reactor under an oxygen atmosphere with a reaction pressure controlled at 10 Pa. The temperature was raised from room temperature to 600°C in the first temperature raising stage at a heating rate of 20°C/min and held for 5 hours; then raised to 1000°C in the second temperature raising stage at a heating rate of 2°C/min and held for 3 hours; then lowered to 550°C in the first temperature lowering stage at a cooling rate of 1°C/min and held for 4 hours; then raised to 850°C in the third constant-temperature stage at a heating rate of 1°C/min and held for 3 hours; and finally cooled from the four-platform temperature to room temperature at a cooling rate of 2°C/min to obtain a base material.

### Embodiment 11

The difference from Embodiment 1 was that:
(1) Metallic nickel, metallic manganese, and metallic cobalt were respectively dissolved in nitric acid to form nitrate solutions. The three solutions were prepared into a mixed solution with a total concentration of Ni, Co, and Mn of 2 mol/L according to a stoichiometric ratio of Ni:Co:Mn = 6:1:3. A NaOH solution with a concentration of 1 mol/L and an ammonia water with a concentration of 0.5 mol/L were continuously introduced into the mixed solution, and the pH value was controlled within the range of 11±0.2. When the D₅₀ reached 8 µm, the reaction was stopped, and the precipitate was centrifuged, washed, and dried to obtain a hydroxide precursor of a cathode material.

### Embodiment 12

The difference from Embodiment 1 was that:
(3) The oxide precursor was mixed with Li₂CO₃ at a Li/Me (where Me is the sum of Ni, Co, and Mn) molar ratio of 1.02:1. The mixture was placed in an atmosphere electric furnace or a Joule heating reactor under an oxygen atmosphere with a reaction pressure controlled at 10 Pa. The temperature was raised from room temperature to 500°C in the first temperature raising stage at a heating rate of 20°C/min and held for 4 hours; then raised to 700°C in the second temperature raising stage at a heating rate of 2°C/min and held for 6 hours; then lowered to 500°C in the first temperature lowering stage at a cooling rate of 1°C/min and held for 4 hours; then raised to the four-platform temperature of 900°C at a heating rate of 1°C/min and held for 2 hours; and finally cooled from the temperature of the third constant-temperature stage to room temperature at a cooling rate of 2°C/min to obtain a base material.
(4) The base material was crushed, followed by secondary sintering at 500°C for 6 hours under an oxygen atmosphere to obtain a cathode material.

The cathode material had the general chemical formula Li_{1.02}Ni_{0.6}Co_{0.1}Mn_{0.3}O₂.

### Embodiment 13

The difference from Embodiment 1 was that:
(1) Metallic nickel, metallic aluminum, and metallic cobalt were respectively dissolved in sulfuric acid to form sulfate solutions. The three solutions were prepared into a mixed solution with a total concentration of Ni, Co, and Al of 2 mol/L according to a stoichiometric ratio of Ni:Co:Al=80:15:5. An appropriate amount of citric acid and ethylene glycol was added to the mixed solution, and the pH value was controlled within the range of 8±0.2. The mixture was then placed in a reaction kettle and held at 180°C for 24 hours to obtain a gel precipitate. The gel precipitate was centrifuged, washed, and dried to obtain a gel precursor.

The cathode material had the general chemical formula Li_{1.02}Ni_{0.8}Co_{0.15}Al_{0.046}Zr_{0.002}Nb_{0.002}O₂.

### Comparative example 1

The difference from Embodiment 1 was that:
(2) The hydroxide precursor Ni_{0.6}Co_{0.1}Mn_{0.3}(OH)ₓ of the cathode material was heated to a temperature of 200°C at a heating rate of 3°C/min and held for 3 hours for annealing to produce an oxide precursor having the general chemical formula Ni_{0.6}Co_{0.1}Mn_{0.3}Oₓ (the content deviation of each element was within ±1%).

### Comparative example 2

The difference from Embodiment 5 was that:
(2) The hydroxide precursor of the cathode material was heated to a temperature of 800°C at a heating rate of 0.5°C/min and held for 10 hours for annealing. During the annealing process, the gas pressure of the reaction environment was controlled at 2.0 kPa to produce an oxide precursor having the general chemical formula Ni_{0.6}Co_{0.1}Mn_{0.3}Oₓ (the content deviation of each element was within ±1%).

### Comparative example 3

The difference from Embodiment 2 was that:
(2) The hydroxide precursor of the cathode material was heated to a temperature of 600°C at a heating rate of 2°C/min and held for 6 hours for annealing to produce an oxide precursor having the general chemical formula Ni_{0.67}Co_{0.05}Mn_{0.28}Oₓ (the content deviation of each element was within ±1%).

### Comparative example 4

The difference from Embodiment 1 was that:
(3) The oxide precursor was mixed with Li₂CO₃ at a Li/Me (where Me is the sum of Ni, Co, and Mn) molar ratio of 1.02:1, and ZrO₂ in the mass concentration of 2000 ppm relative to the oxide precursor was added. The mixture was placed in an atmosphere electric furnace or a Joule heating reactor under an oxygen atmosphere with a reaction pressure controlled at 10 Pa. The temperature was raised from room temperature to 900°C at a heating rate of 20°C/min and held for 12 hours, and the sintered product was cooled to room temperature to obtain a base material.

### Comparative example 5

The difference from Embodiment 1 was that:
(3) The oxide precursor was mixed with Li₂CO₃ at a Li/Me (where Me is the sum of Ni, Co, and Mn) molar ratio of 1.02:1, and ZrO₂ in the mass concentration of 2000 ppm relative to the oxide precursor was added. The mixture was placed in an atmosphere electric furnace under an oxygen atmosphere with a reaction pressure controlled at 10 Pa. The temperature was raised from room temperature to 700°C at a heating rate of 2°C/min and held for 8 hours, and the sintered product was cooled to room temperature to obtain a base material.

The cathode materials prepared in the embodiments and comparative examples were subjected to relevant tests. The test data were shown in Tables 1 and 2 below:

**Table 1 Comparison table of performance of cathode materials of embodiments and comparative examples**

| Serial No. | Free NO₃⁻ (pp m) | Free SO₄ ²⁻ (pp m) | Num ber fracti on R of parti cles with a parti cle size of less than 1 µm (%) | D10 µm | D50 µm | D90 µm | Span | Aver age partic le size of prim ary partic les (µm) | Spec ific surfa ce area (m²/g ) | Tap density (g/cm³ ) | Comp action densit y (g/cm³ ) | Appare nt density (g/cm³) |
|---|---|---|---|---|---|---|---|---|---|---|---|---|
| Embodim ent 1 | 65 | 653 | 15.3 | 1.82 | 3.71 | 8.24 | 1.73 | 2.42 | 0.98 | 2.03 | 3.11 | 1.09 |
| Embodim ent 2 | 58 | 545 | 12.6 | 1.59 | 3.98 | 7.95 | 1.60 | 2.33 | 0.85 | 1.82 | 3.21 | 0.99 |
| Embodim ent 3 | 98 | 788 | 13.3 | 1.22 | 2.54 | 6.18 | 1.75 | 1.23 | 1.42 | 1.90 | 3.15 | 1.05 |
| Embodim ent 4 | 13 | 452 | 8.2 | 2.74 | 4.86 | 7.16 | 0.91 | 4.13 | 0.56 | 2.88 | 3.37 | 1.45 |
| Embodim ent 5 | 25 | 678 | 9.0 | 1.88 | 3.59 | 7.13 | 1.46 | 2.57 | 0.86 | 2.43 | 3.16 | 1.12 |
| Embodim ent 6 | 58 | 691 | 11.7 | 1.76 | 3.82 | 6.76 | 1.31 | 2.25 | 0.81 | 1.68 | 2.96 | 1.03 |
| Embodim ent 7 | 47 | 562 | 8.9 | 1.97 | 3.83 | 8.54 | 1.72 | 2.15 | 0.97 | 2.00 | 3.03 | 1.01 |
| Embodim ent 8 | 19 | 511 | 9.5 | 2.16 | 4.27 | 7.55 | 1.26 | 3.49 | 0.61 | 2.77 | 3.28 | 1.38 |
| Embodim ent 9 | 79 | 588 | 15.8 | 1.35 | 3.90 | 8.72 | 1.89 | 2.85 | 0.79 | 1.98 | 3.25 | 1.05 |
| Embodim ent 10 | 50 | 567 | 10.1 | 1.99 | 4.13 | 7.89 | 1.43 | 2.58 | 0.69 | 2.12 | 3.09 | 1.20 |
| Embodim ent 11 | 89 | 50 | 14.5 | 1.96 | 3.12 | 8.13 | 1.98 | 2.09 | 0.93 | 1.88 | 2.96 | 0.97 |
| Embodim ent 12 | 55 | 612 | 14.0 | 1.90 | 3.89 | 7.65 | 1.48 | 2.48 | 0.91 | 1.99 | 3.05 | 1.01 |
| Embodim ent 13 | 62 | 688 | 13.1 | 1.67 | 3.54 | 6.78 | 1.44 | 2.56 | 0.87 | 1.85 | 3.12 | 0.98 |
| Comparat ive example 1 | 0 | 875 | 15.5 | 1.65 | 3.55 | 7.14 | 1.54 | 2.27 | 1.08 | 2.10 | 2.98 | 1.23 |
| Comparat ive example 2 | 0 | 104 8 | 8.4 | 2.21 | 4.35 | 8.22 | 1.41 | 2.58 | 0.66 | 2.44 | 3.19 | 1.25 |
| Comparat ive example 3 | 0 | 983 | 11.7 | 2.74 | 4.22 | 9.19 | 1.53 | 2.41 | 1.08 | 2.23 | 3.08 | 1.08 |
| Comparat ive example 4 | 68 | 645 | 3.8 | 1.98 | 3.95 | 8.26 | 1.59 | 2.16 | 0.83 | 2.01 | 3.02 | 1.03 |
| Comparat ive embodim ent 5 | 25 | 664 | 19.8 | 1.07 | 3.10 | 6.86 | 1.87 | 1.99 | 1.13 | 2.24 | 3.21 | 1.10 |

**Table 2 Comparison table of electrochemical performance of cathode materials of embodiments and comparative examples**

| Serial No. | Cathode material | Discharge specific capacity (mAh/g) | Initial Coulombic efficiency (%) | Capacity retention rate after 50 cycles at 25°C (%) | Structural recovery degree δ (%) |
|---|---|---|---|---|---|
| Embodiment 1 | Li_{1.02}Ni_{0.6}Co_{0.1}Mn_{0.297}Zr_{0.002}Nb_{0.001}O₂ | 202.5 | 90.4 | 96.88 | 99.85 |
| Embodiment 2 | Li_{1.01}Ni_{0.67}Co_{0.05}Mn_{0.274}Ti_{0.002}Al_{0.004}O₂ | 209.4 | 90.0 | 96.83 | 99.80 |
| Embodiment 3 | Li_{1.02}Ni_{0.6}Co_{0.1}Mn_{0.297}Zr_{0.002}Nb_{0.001}O₂ | 204.0 | 90.3 | 97.15 | 99.82 |
| Embodiment 4 | Li_{1.02}Ni_{0.6}Co_{0.1}Mn_{0.297}Zr_{0.002}Nb_{0.001}O₂ | 203.8 | 90.5 | 96.21 | 99.83 |
| Embodiment 5 | Li_{1.02}Ni_{0.9}Co_{0.05}Mn_{0.046}Zr_{0.002}Nb_{0.002}O₂ | 227.9 | 90.9 | 95.87 | 99.70 |
| Embodiment 6 | Li_{0.99}Ni_{0.6}Co_{0.1}Mn_{0.297}Zr_{0.002}Nb_{0.001}O₂ | 202.0 | 90.0 | 97.15 | 99.75 |
| Embodiment 7 | Li_{1.02}Ni_{0.83}Co_{0.11}Mn_{0.057}Zr_{0.002}Nb_{0.001}O₂ | 219.6 | 91.0 | 95.92 | 99.78 |
| Embodiment 8 | Li_{1.02}Ni_{0.75}Co_{0.15}Mn_{0.096}Zr_{0.002}Nb_{0.002}O₂ | 212.4 | 90.7 | 95.78 | 99.81 |
| Embodiment 9 | Li_{1.01}Ni_{0.67}Co_{0.05}Mn_{0.274}Ti_{0.002}Al_{0.004}O₂ | 208.3 | 90.2 | 96.32 | 99.86 |
| Embodiment 10 | Li_{1.02}Ni_{0.6}Co_{0.1}Mn_{0.297}Zr_{0.002}Nb_{0.001}O₂ | 202.8 | 90.5 | 96.97 | 99.85 |
| Embodiment 11 | Li_{1.02}Ni_{0.6}Co_{0.1}Mn_{0.297}Zr_{0.002}Nb_{0.001}O₂ | 202.4 | 90.3 | 96.62 | 99.87 |
| Embodiment 12 | Li_{1.02}Ni_{0.6}Co_{0.1}Mn_{0.3}O₂ | 201.7 | 90.0 | 95.97 | 99.86 |
| Embodiment 13 | Li_{1.02}Ni_{0.8}Co_{0.15}Al_{0.046}Zr_{0.002}Nb_{0.002}O₂ | 217.6 | 90.6 | 96.22 | 99.76 |
| Comparative example 1 | Li_{1.02}Ni_{0.6}Co_{0.1}Mn_{0.297}Zr_{0.002}Nb_{0.001}O₂ | 201.3 | 89.9 | 94.73 | 99.68 |
| Comparative example 2 | Li_{1.02}Ni_{0.9}Co_{0.05}Mn_{0.046}Zr_{0.002}Nb_{0.002}O₂ | 207.8 | 89.9 | 95.07 | 99.67 |
| Comparative example 3 | **L**i_{1.01}Ni_{0.67}Co_{0.05}Mn_{0.274}Ti_{0.002}Al_{0.004}O₂ | 204.5 | 89.7 | 95.27 | 99.68 |
| Comparative example 4 | Li_{1.02}Ni_{0.6}Co_{0.1}Mn_{0.297}Zr_{0.002}Nb_{0.001}O₂ | 199.8 | 89.4 | 94.62 | 99.65 |
| Comparative embodiment 5 | Li_{1.02}Ni_{0.6}Co_{0.1}Mn_{0.297}Zr_{0.002}Nb_{0.001}O₂ | 203.5 | 89.3 | 94.12 | 99.66 |
| Comparative embodiment 5 | Li_{1.02}Ni_{0.6}Co_{0.1}Mn_{0.297}Zr_{0.002}Nb_{0.001}O₂ | 203.5 | 89.3 | 94.12 | 99.66 |

Based on the test data of Embodiments 1-13, it was found that when the mass concentration of the free nitrate ions in the cathode material was controlled to be between 10 ppm and 100 ppm, while the number fraction of the particles with a particle size of less than 1 µm in the cathode material was controlled to be between 8% and 16%. Under the synergistic effect of an appropriate amount of the free nitrate ions and the particles with a particle size of less than 1 µm, the high-voltage resistance and high capacity of the cathode material can be improved, while the lithium ion transport efficiency of the cathode material is enhanced, and the cycling stability of the cathode material is improved. **In** Comparative examples 1-3, although the cathode materials satisfied the condition that the number fraction of the particles with a particle size of less than 1 µm was between 8% and 16%, they did not satisfy the condition that the mass concentration of the free nitrate ions in the cathode material was between 10 ppm and 100 ppm. **In** Comparative examples 4-5, although the cathode materials satisfied the condition that the mass concentration of the free nitrate ions was between 10 ppm and 100 ppm, they did not satisfy the condition that the number fraction of the particles with a particle size of less than 1 µm was between 8% and 16%. The initial Coulombic efficiency, 50-cycle capacity retention rate, and structural recovery degree of the cathode materials in Comparative examples 1-5 were all inferior to those in Embodiments 1-13.

Based on the test data of Embodiment 1 and Embodiments 3-4, it was found that the cycling stability of the cathode material prepared in Embodiment 3 was better than that of Embodiment 1 and Embodiment 4. The cathode material of Embodiment 4 had a lower mass content of the free nitrate ions, and the cycling stability of the cathode material decreased slightly. The applicant speculated that this was because the free nitrate ions in the cathode material could induce active lithium ions to form an appropriate amount of lithium oxide on the surface of the cathode material during cycling, thereby reducing the surface energy of the cathode material and helping to improve the crystal structure stability of the cathode material.

Based on the test data of Embodiments 4-8, it was found that as the mass fraction of nickel atoms in the cathode material increased, the specific discharge capacity of the cathode material also increased. As long as the mass concentration of the free nitrate ions and the number fraction of the particles with a particle size of less than 1 µm in the cathode material were controlled within appropriate ranges, different series of the cathode materials all exhibited high-voltage resistance, high capacity, and excellent cycling stability.

Based on the test data of Embodiment 2 vs. Embodiment 9 and Embodiment 1 vs. Embodiment 10, it was found that compared with Embodiment 2, the number fraction of the particles with a particle size of less than 1 µm in the cathode material prepared in Embodiment 9 increased. Although the compaction density of the cathode material increased, the increase in fine particles also led to an increase in side reactions, so the discharge capacity and cycling capacity retention rate of the cathode material decreased slightly. Compared with Embodiment 1, the number fraction of the particles with a particle size of less than 1 µm in the cathode material prepared in Embodiment 10 decreased, and the discharge capacity and cycling capacity retention rate of the cathode material increased.

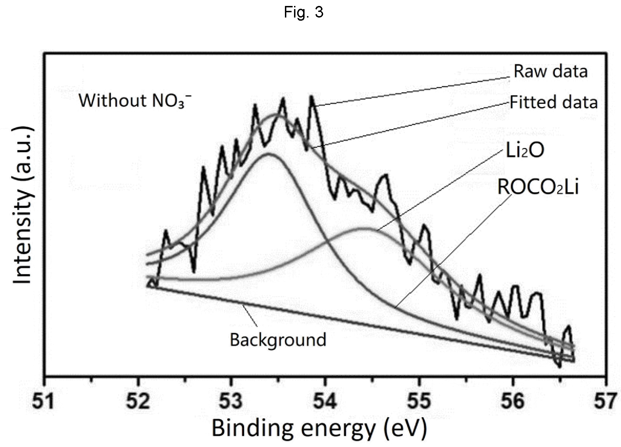

Based on the test data of Comparative example 1 vs. Embodiment 1, Comparative example 2 vs. Embodiment 5, and Comparative example 3 vs. Embodiment 2, and as shown in Figs. 2 and 3, after the first charge-discharge cycle of the batteries prepared with the cathode materials, the free nitrate ion content in the cathode material of Comparative example 1 was 0. In the spectrum obtained by XPS characterization, the main component of the solid electrolyte membrane on the surface of the cathode material was ROCO₂Li. In contrast, the cathode material of Embodiment 1 had an appropriate amount of the free nitrate ions. After the first charge-discharge cycle, Li₂O was induced to form on the surface of the cathode material. Li₂O had high-voltage resistance, which helped to improve the high-voltage resistance of the cathode material and reduce the occurrence of side reactions between the cathode material and the electrolyte. Therefore, the initial Coulombic efficiency of the cathode material of Comparative example 1 decreased, and the cycling capacity retention rate under high voltage also decreased significantly. Similarly, compared with Embodiment 5, the cathode material of Comparative example 2, and compared with Embodiment 2, the cathode material of Comparative example 3, all exhibited significantly decreased specific discharge capacity, initial Coulombic efficiency, and cycling capacity retention rate.

Based on the test data of Comparative example 4 and Embodiment 1, it was found that the free nitrate ion content in the cathode material of Comparative example 4 was within the appropriate range. However, due to the excessively high primary sintering temperature and excessively fast heating rate, some particles fused together. The number fraction of the particles with a particle size of less than 1 µm in the cathode material of Comparative example 4 was too low, the lithium ion transport path was prolonged, the compaction density of the cathode material decreased, the lithium intercalation and deintercalation efficiency of the cathode material decreased, and the discharge capacity of the cathode material decreased significantly.

Based on the test data of Comparative example 5 and Embodiment 1, it was found that the free nitrate ion content in the cathode material of Comparative example 5 was within the appropriate range. However, due to the excessively low primary sintering temperature, the number fraction of the particles with a particle size of less than 1 µm in the cathode material of Comparative example 5 was too high, the particle size distribution width of the cathode material increased, the specific surface area of the cathode material increased, the side reactions between the fine particles and the electrolyte became more severe, and the cycling capacity retention rate of the cathode material decreased.

The embodiments above are merely preferred embodiments of the present invention and are not intended to limit the present invention. For those skilled in the art, the present invention may have various modifications and variations. Any modification, equivalent substitution, improvement and the like made within the spirit and principle of the present invention shall all fall in the protection scope of the present invention.

## Claims

1. A cathode material, wherein the mass concentration of free nitrate ions in the cathode material is Q ppm, where 10 ≤ Q ≤ 100; and in a scanning electron microscope image of the cathode material, the number fraction of particles with a particle size of less than 1 µm in the cathode material is R%, where 8 ≤ R ≤ 16;
wherein the mass concentration Q ppm of the free nitrate ions in the cathode material is obtained by dispersing the cathode material in pure water, performing ultrasonication and filtration, and then characterizing the filtrate by an ion chromatography instrument.

2. The cathode material according to claim 1, wherein the cathode material satisfies any one of the following conditions:
(1) $19 \leq Q \leq 98 ;$
(2) $47 \leq Q \leq 98 ;$ and
(3) the mass concentration of the free nitrate ions in the cathode material is 10 ppm, 12 ppm, 25 ppm, 30 ppm, 50 ppm, 68 ppm, 75 ppm, 80 ppm, 85 ppm, 95 ppm, 100 ppm, or a range composed of any two of the foregoing values.

3. The cathode material according to claim 1, wherein the cathode material satisfies any one of the following conditions:
(1) $8 \leq R \leq 12.6 ;$
(2) $8 \leq R \leq 14.5 ;$ and
(3) the number fraction of the particles with a particle size of less than 1 µm in the cathode material is 8%, 9%, 10%, 11%, 12%, 13%, 14%, 15%, 16%, or a range composed of any two of the foregoing values.

4. The cathode material according to claim 1, wherein the cathode material satisfies at least one of the following conditions:
(1) the volume particle size distribution of the cathode material satisfies: 0.2 µm ≤ D10 ≤ 2.0 µm;
(2) the volume particle size distribution of the cathode material satisfies: 2.0 µm ≤ D50 ≤ 5.0 µm; and
(3) the volume particle size distribution of the cathode material satisfies: 6.0 µm ≤ D90 ≤ 12.0 µm.

5. The cathode material according to claim 1, wherein the mass concentration of free sulfate ions in the cathode material is K ppm, where 10 ≤ K ≤ 800.

6. The cathode material according to claim 1, wherein the cathode material satisfies at least one of the following conditions:
(1) the cathode material is a single-crystal material;
(2) the cathode material comprises crystal grains having the same orientation, and the average grain size of the crystal grains is 1 µm to 5 µm; and
(3) the cathode material comprises primary particles, and the average particle size of the primary particles is 1 µm to 5 µm.

7. The cathode material according to claim 1, wherein the cathode material has a general chemical formula of LiₙNiₓCo_{y}N_{z}MₛO₂, wherein 0.9 ≤ n ≤ 1.1, 0 < x < 1, 0 < y < 1, 0 < z < 1, 0 ≤ s < 1, x + y + z + s = 1, N comprises at least one of Mn and Al, and M comprises at least one of Zr, Mg, W, Mo, Ti, Ba, Sr, Cr, Zn, Y, V, Cu, B, and Nb.

8. The cathode material according to claim 1, wherein the specific surface area of the cathode material is 0.5 m²/g to 1.5 m²/g.

9. The cathode material according to claim 1, wherein when the cathode material is made into a model battery and **characterized by** in-situ XRD, during the first charge-discharge cycle, the structural recovery degree δ of the cathode material satisfies: 99.7% ≤ δ ≤ 100.0%; wherein δ = θ1/θ2 × 100%, θ1 is the diffraction angle of the (003) crystal plane diffraction peak of the cathode material measured by X-ray diffraction at the beginning of the first charge, and θ2 is the diffraction angle of the (003) crystal plane diffraction peak of the cathode material measured by X-ray diffraction at the end of the first discharge.

10. The cathode material according to claim 1, wherein the cathode material satisfies at least one of the following technical features:
(1) the compaction density of the cathode material is 2.5 g/cm³ to 3.5 g/cm³;
(2) the apparent density of the cathode material is 0.5 g/cm³ to 1.5 g/cm³; and
(3) the tap density of the cathode material is 1.0 g/cm³ to 3.0 g/cm³.

11. The cathode material according to claim 1, wherein after the cathode material is made into a coin cell and subjected to one charge-discharge cycle, the cathode material is **characterized by** XPS, and in the XPS spectrum of the cathode material, the cathode material has a Li₂O phase.

12. The cathode material according to claim 11, wherein in the XPS spectrum of the cathode material, the cathode material has a characteristic peak at a binding energy between 53.5 eV and 55 eV.

13. The cathode material according to claim 1, wherein the volume particle size distribution of the cathode material satisfies: 0.8 ≤ (D90 - D10)/D50 ≤ 2.0.

14. A cathode sheet, wherein the cathode sheet comprises the cathode material according to any one of claims 1 to 13.

15. A battery, wherein the battery comprises the cathode sheet according to claim 14 or the cathode material according to any one of claims 1 to 13.
